(19) Europäisches Patentamt
European Patent Office
Office européen des brevets

(11) Veröffentlichungsnummer: **0 291 446 A1**

(12) **EUROPÄISCHE PATENTANMELDUNG**

(21) Anmeldenummer: **88730115.8**

(22) Anmeldetag: **11.05.88**

(51) Int. Cl.4: **C 02 F 1/52**
C 01 D 3/06

(30) Priorität: **12.05.87 GR 870739 22.07.87 GR 871179**

(43) Veröffentlichungstag der Anmeldung:
**17.11.88 Patentblatt 88/46**

(84) Benannte Vertragsstaaten: **ES FR GR IT NL**

(71) Anmelder: **MANNESMANN Aktiengesellschaft**
**Mannesmannufer 2**
**D-4000 Düsseldorf 1 (DE)**

**Kalamaraki, Marianthi**
**101, Athinia Sounio Avenue**
**GR-19013 Agia Marina (GR)**

**Kalamaraki, Fotini**
**101, Athinia Sounio Avenue**
**GR-19013 Agia Marina (GR)**

**Kalamarakis, Emmanouil**
**101, Athinia Sounio Avenue**
**GR-19013 Agia Marina (GR)**

(72) Erfinder: **Kalamaraki, Marianthi**
**101, Athinia**
**Sounio Avenue 19013 Agia Marina (GR)**

**Kalammarakis, Emmanouil**
**101, Athinia**
**Sounio Avenue 19013 Agia Marina (GR)**

**Kalamaraki, Fotini**
**101, Athinia**
**Sounio Avenue 19013 Agia Marina (GR)**

(74) Vertreter: **Meissner, Peter E., Dipl.-Ing. et al**
**Meissner & Meissner Patentanwälte Herbertstrasse 22**
**D-1000 Berlin 33 Grunewald (DE)**

(54) **Verfahren zur Entfernung von Verunreinigungen aus Lösungen.**

(57) Die Erfindung betrifft ein Verfahren zur Entfernung hochmolekularer, kolloidaler oder semikolloidaler, vorwiegend organischer Verunreinigungen einschließlich lebender Mikroorganismen aus Lösungen, insbesondere in Form von Seewasser oder Seewasserkonzentraten. Um dieses Verfahren einfach und wenig aufwendig durchführen zu können, wird vorgeschlagen, daß der Lösung (A) zur Fällung ein basisches, adsorptiv wirkendes Mittel (C) zugesetzt wird und die entstehenden Ausfällungen von der Lösung abgetrennt werden (M).

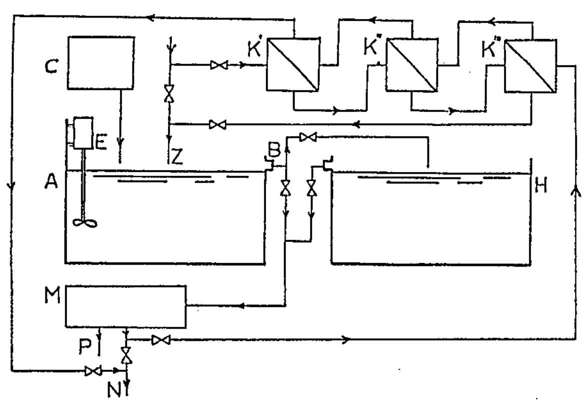


EP 0 291 446 A1

**Beschreibung**

**Verfahren zur Entfernung von Verunreinigungen aus Lösungen**

Die Erfindung betrifft ein Verfahren zur Entfernung hochmolekularer, kolloidaler oder semikolloidaler, vorwiegend organischer Verunreinigungen aus Lösungen, insbesondere in Form von Seewasser, Seewasserkonzentraten oder Lösungen mit ähnlichen Zusammensetzungen. Die Verunreinigungen in diesen der Salzgewinnung dienenden Lösungen haben teilweise eine färbende Wirkung.

Aus der Kristallisationskinetik ist es bekannt, daß die Keimbildung heterogen an feinsten suspendierten Partikeln, also auch an kolloidalen Verunreinigungen erfolgen kann. Je stärker Lösungen mit derartigen Verunreinigungen beladen sind, umso feiner werden die aus diesen Lösungen gewonnenen Kristallisate.

Ferner ist es bekannt, daß das Kristallwachstum durch hochmolekulare organische Verbindungen gehemmt und/oder gestört werden kann, so daß feine und/oder stärker verunreinigte Kristallisate entstehen.

In der Regel sind feine Kristallisate unerwünscht, da sie bei gleicher Trennarbeit mehr Restfeuchte enthalten. Die höhere Restfeuchte erfordert nämlich nicht nur mehr Trockenarbeit bei der Aufbereitung des Kristallisates, sondern bringt auch eine Erhöhung des Verunreinigungsgrades mit sich. Insbesondere bei (quasi-) kontinuierlich gefahrenen Salzgewinnungsprozessen, gleich ob Sonnensalinenbetrieb oder Vakuumraffination, welche zur Erzielung optimaler Ausbeuten mit hohem Aufkonzentrierungsgrad betrieben werden, treten diese Effekte störend Erscheinung.

Außer der Kristallisatverfeinerung bewirken die Verunreinigungen häufig auch Produktverfärbungen, die beide nur durch anlösende Waschungen und teilweise nur unvollkommen entfernt werden können. Derartige Verunreinigungen und Verfarbungen werden vielfach durch Bakterien, Algen etc. verursacht, die in Salzen und Salzlösungen lebensfähig sind und in vielen Sonnensalinen auftreten.

Aufgabe der Erfindung ist es, ein Verfahren anzugeben, mit dem auf einfache und wenig aufwendige Weise die beschriebenen Verunreinigungen, die häufig in Meerwasser und Meer- oder Salzwasserkonzentraten vorliegen, aus Lösungen für die Salzgewinnung, die insbesondere in Sonnensalinen oder nachgeschalteten Reinigungsprozessen, namentlich Vakuumsalzgewinnungen, verarbeitet werden sollen, entfernt werden können.

Gelöst wird diese Aufgabe durch ein Verfahren mit den Merkmalen des Patentanspruchs 1; vorteilhafte Weiterbildungen der Erfindung sind in den Unteransprüchen 2 - 5 angegeben.

Grundgedanke der Erfindung ist es, daß man der Lösung ein basisches, adsorptiv wirkendes Fällungsmittel zusetzt und die entstehenden Ausfällungen mit den darin gebundenen Verunreinigungen von der Lösung z.B. durch Dekantation abtrennt. Dabei kommen bevorzugt Aluminium- oder Magnesium-Verbindungen zur Anwendung. Das Fällungsmittel kann entweder in fertiger Form von außen zugesetzt oder in der Lösung selbst erzeugt werden. Für die letztere Verfahrensweise ist die Zugabe einer Base dann ausreichend, wenn die Lösung spürbare Konzentrationen an Magnesium-Verbindungen enthält. Als Basen werden dabei vorzugsweise Kalkmilch oder gelöschter, gebrannter Dolomit (dolime) eingesetzt.

Die erfindungsgemäße Lösung ergab sich in völlig überraschender Weise als Nebeneffekt bei dem Versuch, den $MgSO_4$-Anteil aus der Mutterlauge durch Zugabe von Kalkmilch auszufällen, um den Ausfall von Sulfaten bei weiterer Konzentrierung der Verunreinigungen zu vermeiden und dadurch die NaCl-Ausbeute zu erhöhen. Dieser Behandlung liegt folgende Reaktionsgleichung zugrunde:

$$MgSO_4 + Ca(OH)_2 \xrightarrow{pH > 9} \underline{Mg(OH)_2} + \underline{CaSO_4}$$

Diese Maßnahme führte jedoch nicht nur zu der angestrebten Erhöhung der NaCl-Ausbeute, sondern auch nach Dekantation der Lösung zu einer praktisch vollständigen Entfernung der kolloidal verteilten oder gelösten zum Teil farbigen Verunreinigungen aus der Mutterlauge. Weiterhin ergab sich der Vorteil, daß das aus der gereinigten Mutterlauge hergestellte, reinere Salz auch eine deutlich gröbere Körnung aufwies als zuvor und daher in der Trennstation mit geringerer Restfeuchte abgetrennt werden konnte. Die anhaftende Mutterlauge war zudem nicht mit störenden organischen Verunreinigungen belastet.

Anhand des Anlagenschemas wird die Erfindung im folgenden näher erläutert.

Die zu reinigende Lösung wird durch die Leitung Z in den Behälter A gegeben, der mit dem Überlauf B und dem Rührwerk E versehen ist und eine Kapazität hat, die wenigstens der Menge an Lösung entspricht, die z.B. innerhalb von 15 oder 20 Minuten gereinigt werden soll. Das Fällungsmittel wird aus dem Vorratsbehälter C in den Behälter A gegeben und durch das Rührwerk intensiv mit der Lösung vermischt. Sofern für die Fällungsreaktion eine längere Verweilzeit erforderlich ist, kann die am Überlauf B abgezogene Lösung in den Behälter H gegeben und nach Ablauf der Verweilzeit von dort der Trennstation M zugeführt werden, wo die gereinigte Lösung von den Fällungsprodukten abgetrennt wird.

Die Abzugsleitung für die gereinigte Lösung ist mit N und die für die Fällungsprodukte (einschließlich der Verunreinigungen) mit P bezeichnet. Sofern die Verweilzeit im Behälter A bereits ausreicht, kann die mit dem Fällungsmittel gemischte Lösung der Trennstation M auch unmittelbar zugeführt werden. Ein Sonnensalinenbecken kann ebenfalls z.B. als Trennstation fungieren. In vielen Fällen ist es zur Verbesserung des Reinigungsprozesses zweckmäßig, die zu reinigende Lösung vorher zu erwärmen. Sofern die gereinigte Lösung für die Weiterverarbeitung (Kristallisationsprozeß) nicht erwärmt zu sein braucht, ist die Rückgewinnung der in der gereinigten Lösung enthaltenen Wärme für die Erwärmung der noch zu reinigenden Lösung wirtschaftlich sinnvoll. Für diesen Zweck sind die mit K′, K″ und K‴ bezeichneten Wärmetauscher vorgesehen, durch die im Gegenstrom die beiden Lösungsströme hindurchgeführt werden können, so daß Wärme von der gereinigten Lösung an die noch zu reinigende Lösung abgegeben wird. Lediglich ein Teil der benötigten Energie muß dann zum Ausgleich der Verlustwärme neu dem Prozeß zugeführt werden. Die in das Fließschema eingezeichneten Ventile zeigen, daß die Durchleitung durch die Wärmetauscher K′, K″ und K‴ bzw. den Behälter H wahlweise vorgenommen werden kann.

**Patentansprüche**

1. Verfahren zur Entfernung hochmolekularer, kolloidaler oder semikolloidaler, vorwiegend organischer Verunreinigungen einschließlich lebender Mikroorganismen aus Lösungen, insbesondere in Form von Seewasser oder Seewasserkonzentraten,
dadurch gekennzeichnet,
daß der Lösung zur Fällung ein basisches, adsorptiv wirkendes Mittel zugesetzt wird und die entstehenden Ausfällungen von der Lösung abgetrennt werden.

2. Verfahren nach Anspruch 1,
dadurch gekennzeichnet,
daß als Fällungsmittel basische Mg- oder Al-Verbindungen eingesetzt werden.

3. Verfahren nach Anspruch 1 oder 2,
dadurch gekennzeichnet,
daß das Fällungsmittel zumindest teilweise in der Form zugesetzt wird, daß in die Lösung ein Stoff gegeben wird, der sich in der Lösung mit einem anderen darin enthaltenen Stoff chemisch zu dem Fällungsmittel umsetzt.

4. Verfahren nach Anspruch 3,
dadurch gekennzeichnet,
daß Kalkmilch oder $Mg(OH)_2$-haltige Kalkmilch (dolime) in einer solchen Menge zugesetzt wird, daß in den Ausfällungen $Mg(OH)_2$ vorliegt.

5. Anwendung des Verfahrens nach einem der Ansprüche 1 - 4 auf den Betrieb von Sonnensalinen.

0291446

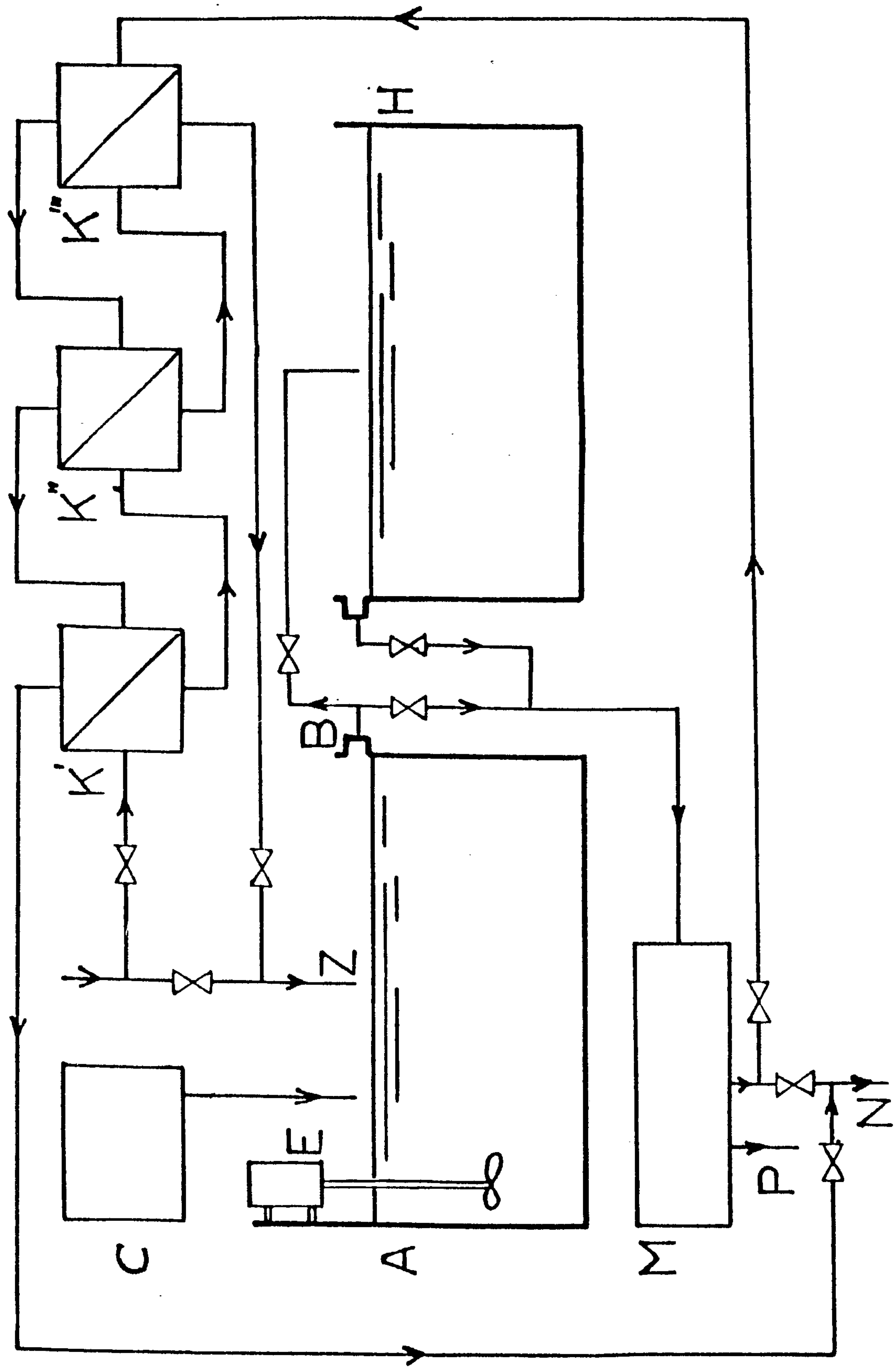

Europäisches Patentamt

# EUROPÄISCHER RECHERCHENBERICHT

Nummer der Anmeldung

EP 88 73 0115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 652 378 (MOSHE MARIKOVSKY et al.)<br>* Spalte 1, Zeile 52 - Spalte 2, Zeile 17; Spalte 2, Zeilen 44-52; Spalte 6, Zeilen 4-14 *<br>--- | 1,2,5 | C 02 F 1/52<br>C 01 D 3/06 |
| X | PATENT ABSTRACTS OF JAPAN, Band 7, Nr. 86 (C-161)[1231], 9. April 1983; & JP-A-58 14 987 (MASAAKI TAKESHITA) 28-01-1983<br>* Zusammenfassung *<br>--- | 1,2 | |
| A | PATENT ABSTRACTS OF JAPAN, Band 3, Nr. 100 (C-56), 24. August 1979; & JP-A-54 78 398 (TOYO SODA KOGYO K.K.) 22-06-1979<br>--- | 1-4 | |
| A | CHEMICAL ABSTRACTS, Band 95, Nr. 20, 16. November 1981, Seite 313, Zusammenfassung Nr. 174185r, Columbus, Ohio, US; & IN-A-145 961 (COUNCIL OF SCIENTIFIC AND INDUSTRIAL RESEARCH (INDIA)) 27-01-1979<br>----- | 1-4 | RECHERCHIERTE SACHGEBIETE (Int. Cl.4)<br>C 02 F<br>C 01 D |

Der vorliegende Recherchenbericht wurde für alle Patentansprüche erstellt

| Recherchenort | Abschlußdatum der Recherche | Prüfer |
|---|---|---|
| DEN HAAG | 11-08-1988 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)